# EUROPEAN PATENT APPLICATION

(11) **EP 0 958 891 A1**
(43) Date of publication of application: **24.11.1999**
(21) Application number: 98109187.9
(22) Date of filing: 20.05.1998
(51) Int. Cl.: B25B 1/00, B25B 23/00, B60B 29/00

(54) **A device for loosening nuts**

(71) Applicant: Kirwin, Michael Peter, Bramhope, Leeds, LS16 9HW (GB); Kirwin, Terence Patrick, Cookridge, Leeds, LS16 7LJ (GB); Vijatov, Alex, Wrose, Bradford, BD2 1PF (GB); Hopkinson, Richard, Beaumaras, Melbourne 3193 (AU)
(72) Inventor: Chalker, Graeme, Beaumaras, Melbourne 3193 (AU)
(74) Representative: Wood, Graham

(57) **Abstract**

The invention which is the subject of this application relates to a device (10) for enabling increased torque to be applied to a nut while maintaining the position of the same. The socket, brace or wrench used in position on the nut to apply a releasing torque is maintained and supported at the required height, thus enabling the torque to be applied efficiently and by a single person. The invention is of particular advantage in removing wheel nuts and, in particular, heavy goods vehicle wheel nuts, where particularly large removal sources are required.

## Description

This invention relates to a device for loosening nuts, in particular wheel nuts and is of particular use to assist in the loosening of wheel nuts on trucks, trailers and other heavy duty vehicles.

Vehicles, and in particular, but not exclusively, heavy duty vehicles such as trucks, trailers, tractors and four-wheel drive vehicles which have large wheels, have wheels that are conventionally secured by nuts onto threaded studs that project from the hub of the vehicle in heavy duty vehicles. The large size of the wheels means that comparatively large diameter studs are used entailing the use of comparatively large nuts. The release of nuts on wheels of this kind requires considerable torque and there has been an on going problem in providing a means of "cracking" the nut. The usual means of "cracking" a nut is to apply a brace or wrench to the nut and, by use of an extension bar, such as a piece of pipe, applying a considerable moment or torque to the nut which, when applied with sudden force, causing the nut to "crack" or release itself thereby enabling the nut to be unscrewed off the stud.

A problem with applying a large moment or torque to the nut means that the force has to be applied a considerable distance from the nut which means that it is difficult to apply the force and hold the wrench or brace on the nut. It is this problem that has brought about the present invention.

According to the present invention, in a first aspect there is provided a device for loosening a nut comprising a free-standing reaction member having means adapted to support and locate a brace or wrench against the nut whereby the device holds the brace or wrench in position whilst sufficient torque can be applied to the brace or wrench to loosen the nut. Typically the nut is a wheel nut.

The means to support and locate the brace or wrench in one embodiment comprises a key hole slot. The slot being large enough to facilitate the passage of the head of the brace or wrench and to include a portion that locates and supports the shank of the brace or wrench. Preferably, the key hole slot is provided in a plate that is secured to a free standing post and the vertical position of the plate relative to the post is adjustable. In another embodiment, a plurality of the key hole slots are positioned in a spaced array on a plate, the plate being adapted to be free standing and the array being arranged to correspond to the spacing of the vehicle wheel nuts. In one embodiment the device can be folded about at least one hinged location means to allow improved storage of the same.

Embodiments of the present invention will now be described by way of example only with reference to the accompanying drawings in which:-
Figure 1 is a side elevational view of a device for assisting in the loosening of wheel nuts in accordance with a first embodiment of the invention;
Figure 2 is an end elevational view of the device of Figure 1.
Figure 3A is an end elevation of part of the device shown in Figures 1 and 2.
Figure 3B is a detailed view along the direction of arrow A of Figure 3A.
Figure 4 is a side elevation of the part shown in Figure 3.
Figure 5 is an end elevational view of a slide that forms part of the device shown in Figures 1 and 2.
Figure 6 is a side elevational view of the slide shown in Figure 5.
Figures 7A and 7B are end and side elevational views of a device in accordance with a second embodiment of the invention;
Figures 8A and 8B are end and side elevations of a slight variation to the device shown in Figures 7A and 7B.
Figure 9 shows an example of the device in use attached to the wheel nut of a large truck wheel;
Figure 10 is a two elevational view of the fold-up embodiment of the device.

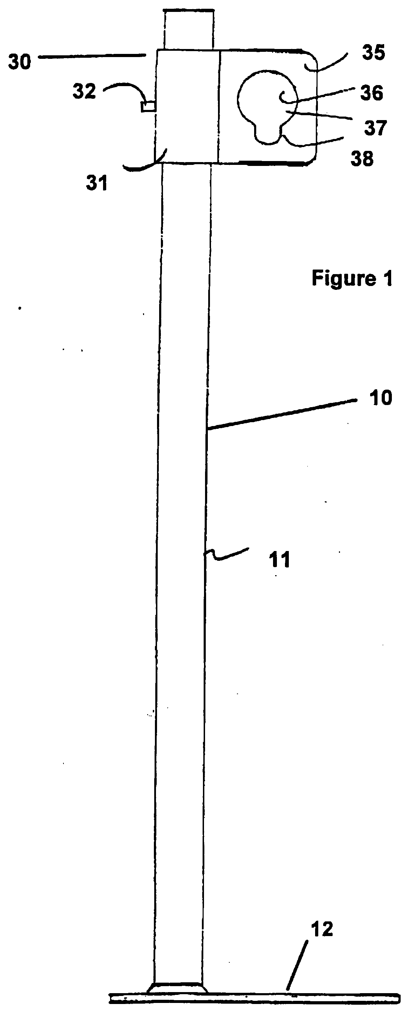

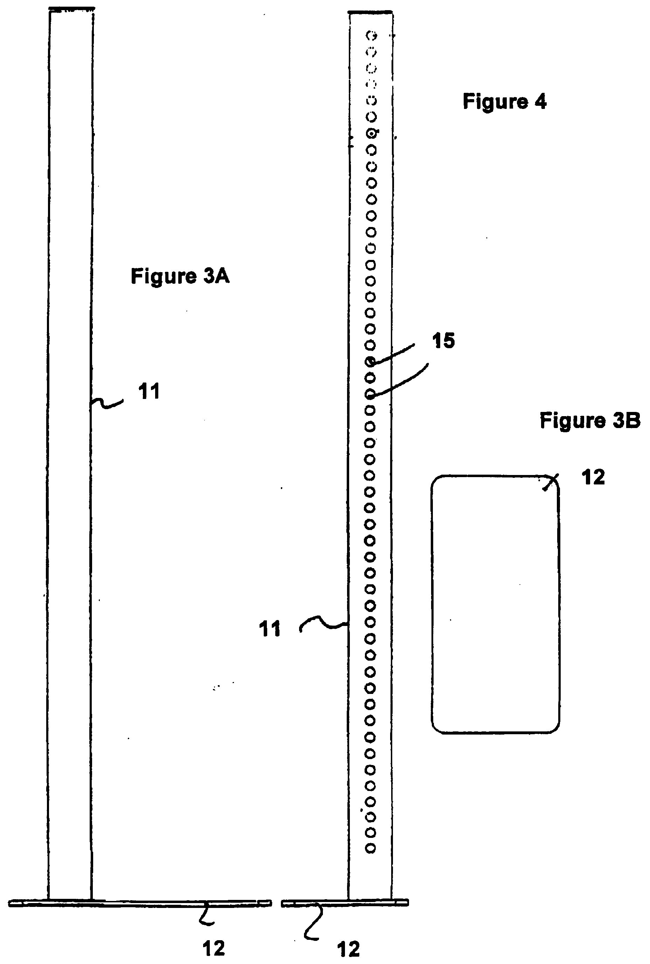

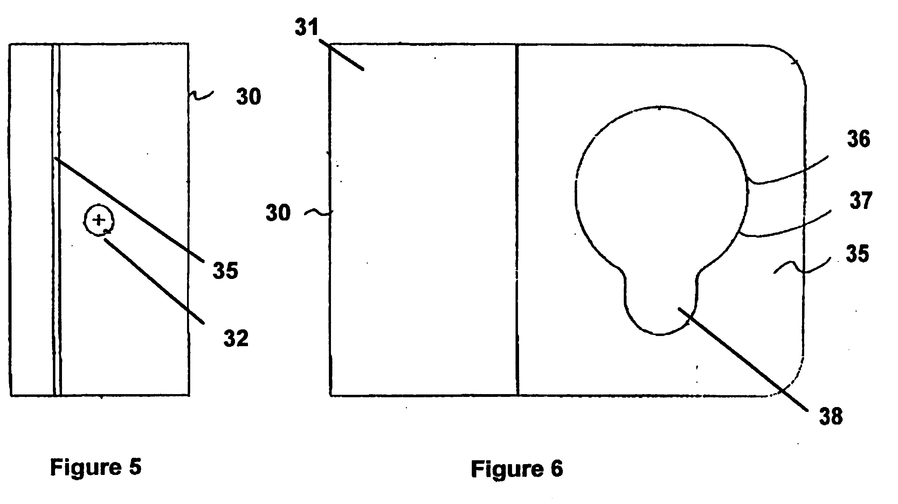

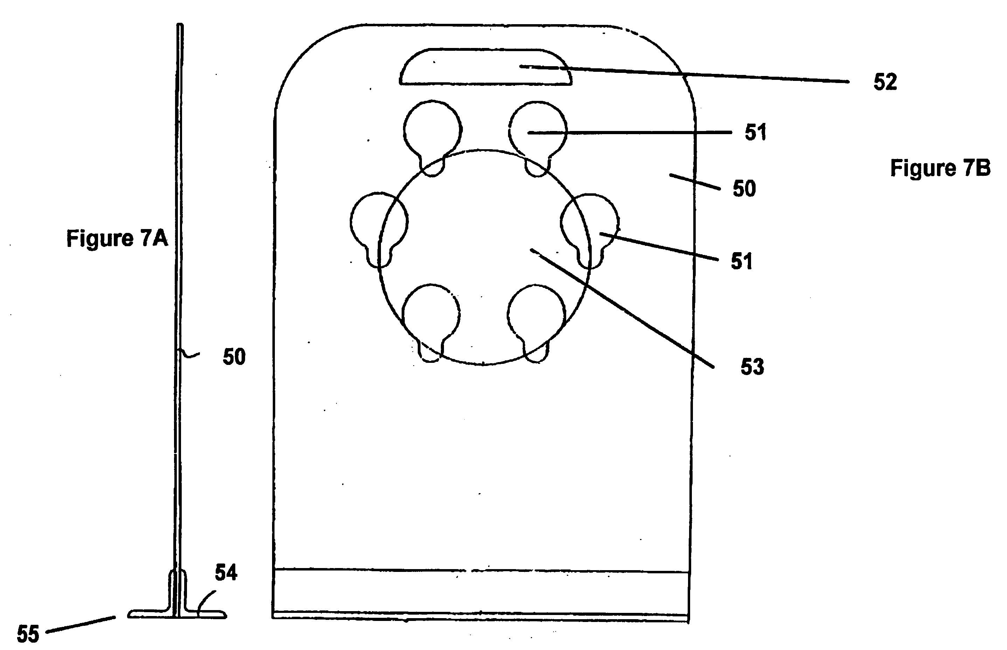

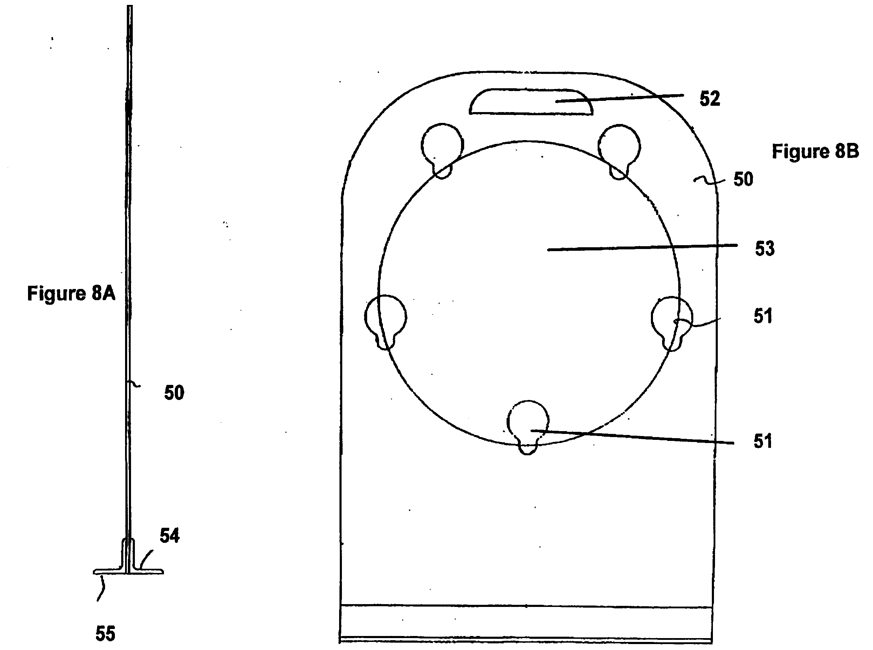

The accompanying drawings show embodiments of a device to assist in the loosening of wheel nuts especially for use with trucks, trailers, other heavy duty vehicles, motor vehicles and cars. The embodiment shown in Figures 1 to 6 and 9 to 10, is a universal model that is adjustable so that it can be used on a variety of vehicles and other instances where nuts need to be removed from machinery. The embodiments shown in Figures 7 and 8 relate to specific models that have been manufactured for particular vehicles.

Wheel nuts on heavy duty vehicles such as trucks, trailers, tractors, four-wheel drive vehicles, cars, and other machinery, are traditionally difficult to loosen. The dirt, dust and sometimes rust that collects around the wheel studs and nuts means that there is a need to "crack" the nut to loosen the nut on the stud. The expression "cracking" the nut does not mean that the nut is damaged but means that the join between the nut and the stud is loosened. The application of high torque to a wheel nut usually requires a long bar to be attached to the brace or wrench that fits onto the nut. It is common practice to use a brace or socket to release the wheel nuts and a length of pipe is placed on the socket lever to provide the necessary moment to crack the nut. The device of this application relates to a stand that supports the shank of the brace or socket in axial alignment with the nut whilst allowing the application of a large moment caused by an extension piece being applied mutually perpendicular to the shank of the socket. The post is free standing and acts as a reaction to the downward force that would otherwise be placed on the socket thereby tending to drag the socket off the nut. In one embodiment the extension piece can be stowed whithin the stand when not in use.

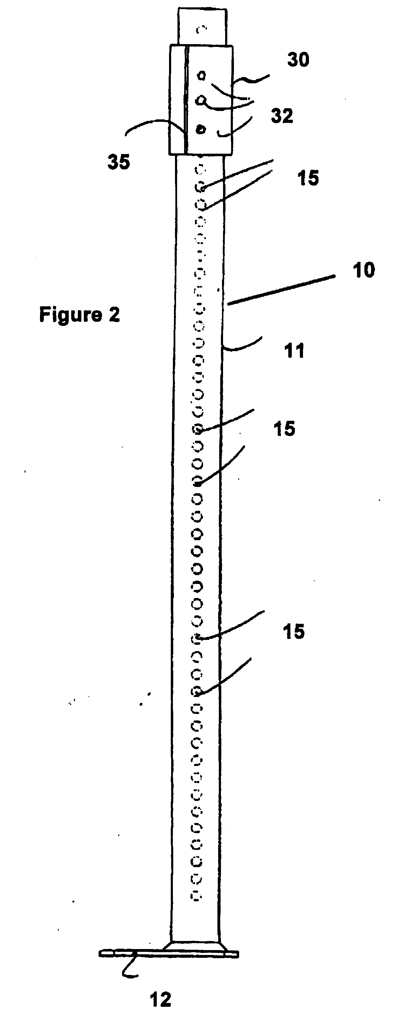

As shown in Figures 1 to 6, and 9 to 10, the device 10 comprises a free standing post 11 that is formed of hollow box tubing that is welded centrally of a rectangular plate 12 that acts as a base allowing the post to stand freely and securely. As shown in Figure 2, opposite sides of the post are provided with a vertical array of coaxial apertures 15 running from the bottom to the top of the post 11. The post supports a slide 30 that comprises a sleeve 31 of square cross section that is a sliding fit on the post. The sleeve 31 has axially aligned apertures 32 provided in the walls so that a pin (32a) can be positioned through the selected apertures 32 in the sleeve 31 and through selected apertures 15 in the post to firmly fix and locate the slide 30 at a particular position of the post. The sleeve 31 is welded to a laterally projecting rectangular plate 35 that is provided with a central key hole slot 36. The key hole slot effectively comprises an enlarged circular opening 37 with a small elongate slot 38 at its base. The circular opening 37 allows the head of a socket or brace (not shown) to extend therethrough whilst the elongate slot 38 axially locates the shank of the brace or socket.

By providing the locating means for the brace or wrench in the form of a key hole slot rather than a U-shaped locating means, so the brace or wrench is effectively trapped within the wrench as the same can only be raised during use to the height of the slot. If this raise in height occurred in U-shaped means, the brace or wrench would lift and slip from the locating means and possibly cause injury if a person is applying a torque at the time via the extension piece connected to the brace or wrench.

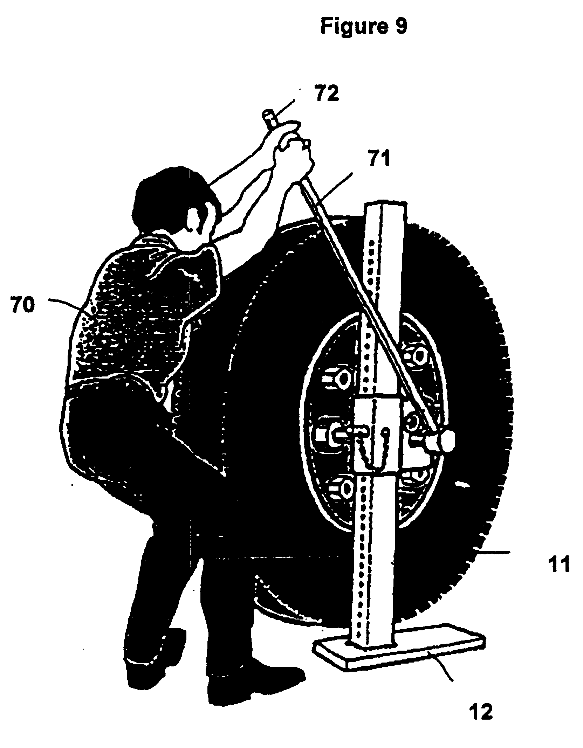

To use the device 10 described above, the slide 30 is positioned so that the centre of the key hole slot 36 is axially aligned with the wheel nut that is to be loosened. With the base positioned adjacent the wheel and the sleeve in the desired position, a socket or brace is extended through the key hole slot to engage the nut. The shank of the socket or brace is axially located in the narrow portion 38 of the key hole slot 36. A transverse bar 71 can then be placed on the projecting end of the socket and this bar can be of any desired length that will provide the torque necessary to release the nut. The advantage of this arrangement is that a single operator 70 can, if they wish, with two hands, grip the bar at the free end 72 which can be a substantial distance from the post. A sharp movement on the bar will have the effect of cracking the nut as shown in Figure 9. The post and the axial location of the shank of the socket ensures that the sharp movement on the bar does not cause the socket to simply slide off the nut. The post and plate not only ensure axial alignment of the shank of the socket with the nut but also act as a reaction member to resist downward force that would be applied to the shank of the socket if it was not supported in this manner. Thus, one person can apply enormous torque to wheel nuts thus providing the opportunity for a driver of a vehicle to remove a wheel single handedly which is often impossible with heavy duty vehicles such as trucks, or with nuts that are difficult to loosen on wheels, or on any items, of any size.

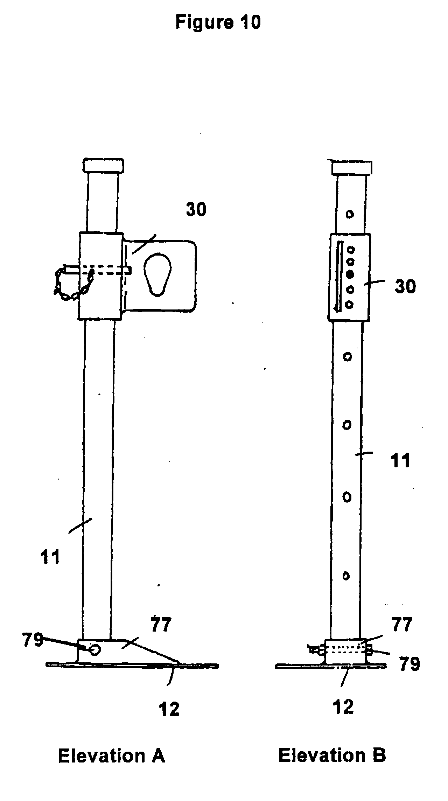

It is understood that the association of the post 11 and the foot plate or base 12 is such that the assembly is free standing on the adjacent road surface. The foot plate is designed to provide stability and ensure that the assembly is not prone to toppling. It is understood that the post could be detachable from the foot plate or base to facilitate storage. There is a rigid version, and also a fold up version, as shown in Figure 10, in two elevations, wherein the foot plate or base 12 pivots relative to the post 11 to assume a folded position for storage. A large base plate 12 is used to give the device stability to free stand safely. A steel surround 77 is fitted to a vertical stand and welded to the base plate. One side of the surround extends across the base plate to give extra support. The pivot bolt holes 79 are located in this surround. A slot is machined in one end of the vertical stand. A steel insert is welded inside parallel to the edge of the slot giving a flat steel surface. The hole in the surround and the slot in the vertical stand are so positioned that when the pivot bolt is installed and the vertical stand is lifted to a vertical position, it leaves a clearance from the base plate, with the vertical stand pushing hard on the back of the surround, and the pivot bolt through an angle slot. This creates a "wedge" effect. The more pressure exerted down when in use the greater the vertical stand is pushed into the base surround thus giving more positive stability and safety to the user.

The embodiment illustrated in Figures 1 to 6 and 9 through 10, through the ability to adjust the height of the keyhole slot can be used on a variety of vehicles or in fact nuts of many other machinery types. However, it is also envisaged that devices may be manufactured specifically to suit a vehicle and examples of two such devices are shown in Figures 7 and 8. In the embodiments of Figures 7 and 8, a substantially rectangular plate 50 has a series of key hole slots 57 arranged on a pitch circle to match the pitch and spacing of the wheel nuts of a particular vehicle. The plate 50 has an elongate carrying slot 52 positioned towards its upper end and a central portion 53 is provided with a hazard decal. The plate 50 is welded to two pieces of angle iron 54 and 55 that project laterally on either side of the plate as shown in Figures 7A and 8A to act as feet providing a stable free standing support for the plate. In Figure 7, the plate has an array of six key hole slots 51 to facilitate the spacing of six nuts on a particular vehicle whilst in the embodiment shown in Figure 8, a five studded arrangement is shown where the key hole slots 51 are on a pitch circle of greater diameter but are spaced further apart than the embodiment shown in Figure 7. It is understood that a variety of plates are envisaged, each having an array of key hole slots corresponding to the pitch and spacing of the wheel nuts of a particular vehicle. The embodiments of Figures 7 and 8 operate in much the same way as the first embodiment except that since the plate 50 defines a series of key hole slots 51, the socket or brace can be simply positioned from one slot to another to facilitate loosening of the wheel nut. In the embodiment shown in Figures 1 to 6 and 9 to 10, there is a need to move the post and height of the keyhole slot to re-align the key hole slot with each nut.

The embodiments of Figures 7 and 8 may also include an arrangement whereby the lateral extending feet are detachable to facilitate storage. The components of the device described above is preferably constructed of steel although it is envisaged that other suitable materials could also be used.

It is also understood that the device is applicable to all types of vehicles and other equipment which can be used both for the purposes of loosening and tightening of wheel nuts.

## Claims

1. A device for loosening a nut characterised in that the device comprises a free standing reaction member having means adapted to support and locate a brace or wrench against a nut whereby the device holds a brace or wrench in position on the nut whilst sufficient torque can be applied to the brace or wrench to loosen the nut.

2. A device according to claim 1 characterised in that the means to support and locate the brace or wrench comprises a key hole slot.

3. A device according to claim 2 characterised in that the key hole slot comprises a first portion large enough to facilitate the passage of the head of the brace or wrench and a further portion that locates and supports the shank of the brace or wrench.

4. A device according to claim 2 characterised in that the key hole slot is provided in a plate secured to a free standing post.

5. A device according to claim 4 characterised in that the plate can be moved along the post and positioned at a series of predetermined locations.

6. A device according to claim 4 characterised in that the plate can be moved along the post and positioned at any point thereon.

7. A device according to claim 2 characterised in that a plurality of key hole slots are positioned in spaced array on a plate.

8. A device according to claim 7 characterised in that the plate is adapted to be free standing and the array of key hole slots is arranged to correspond to the spacing of a known array of nuts.

9. A device according to any preceding claim characterised in that there is provided a base plate located at one end of the free standing reaction member to provide a stable base during use of the said device.

10. A device according to claim 9 characterised in that the base plate can be moved between a storage position which is substantially parallel with the reaction member and an in-use position which lies substantially perpendicular to the reaction member.

11. A device according to any of the preceding claims characterised in that the nut is a nut for retaining a wheel on a vehicle.
